# EUROPÄISCHE PATENTSCHRIFT

(11) **EP 2 218 324 B1**
(45) Veröffentlichungstag und Bekanntmachung des Hinweises auf die Patenterteilung: **01.04.2015**
(21) Anmeldenummer: 10001089.1
(22) Anmeldetag: 03.02.2010
(51) Int. Cl.: A01G 3/053

(54) **Messeranordnung einer Heckenschere**
Cutting assembly of a hedge trimmer
Agencement de coupe d'un taille-haie

(30) Priorität: 13.02.2009 DE 102009008819
(43) Veröffentlichungstag der Anmeldung: 18.08.2010
(73) Patentinhaber: Andreas Stihl AG & Co. KG, 71336 Waiblingen (DE)
(72) Erfinder: Heinzelmann, Georg, 71522 Backnang (DE); Hittmann, Markus, 71384 Weinstadt (DE)
(74) Vertreter: Wasmuth, Rolf

(56) Entgegenhaltungen:
- EP-A1- 0 635 200
- EP-A1- 0 696 419
- DE-U1- 8 419 115
- FR-A1- 2 758 234

## Beschreibung

Die Erfindung betrifft eine Messeranordnung einer Heckenschere mit den Merkmalen nach dem Oberbegriff des Anspruchs 1.

Motorisch angetriebene Heckenscheren, wie z.B. DE 84 19 115 U, umfassen mindestens ein Schermesser, häufig auch zwei gegenläufig angetriebene Schermesser mit seitlich angeordneten Schneidzähnen. Das Schermesser erstreckt sich entlang einer Messerachse, wobei sich die Schneidzähne jeweils entlang einer quer zur Messerachse liegenden Zahnachse erstrecken. Im Schneidbetrieb wird die Messeranordnung derart geführt, dass das Schnittgut in die Zwischenräume zwischen den Schermessern gelangt. Durch deren oszillierende Bewegung wird das Schnittgut an den Schneiden der Schneidzähne durchtrennt.

Zur Erfüllung der einschlägigen Sicherheitsnormen sind Bauformen bekannt, bei denen zumindest ein Teil der Schneidzähne als Schutzzahn ausgebildet ist. Ein solcher Schutzzahn weist bezogen auf die Messerachse einen inneren Schnittbereich auf, an den sich ein äußerer Schutzfinger anschließt. Die in einem bestimmten Abstand zueinander liegenden Schutzfinger hindern Gegenstände oberhalb eines bestimmten Durchmessers daran, in den inneren Schnittbereich zu gelangen. Derartige Schutzfinger können aber auch hinderlich sein, das tatsächlich zum Durchtrennen vorgesehene Schnittgut in den Schnittbereich hineinzuführen. Außerdem ist zu beobachten, dass ein Teil des in den Schnittbereich eingeführten Schnittgutes beim Auftreffen der Schneiden nach außen aus dem Schnittbereich herausgedrückt wird. Dies führt zu einer unvollständigen Durchtrennung, was die Schnittleistung der Messeranordnung und die Schnittqualität verringert.

Der Erfindung liegt die Aufgabe zugrunde, eine gattungsgemäße Messeranordnung derart weiterzubilden, dass die Schnittleistung und Schnittqualität ohne Beeinträchtigung der Betriebssicherheit verbessert sind.

Diese Aufgabe wird durch eine Messeranordnung mit den Merkmalen des Anspruchs 1 gelöst.

Es wird eine Messeranordnung vorgeschlagen, bei der der Schutzzahn bezogen auf seine Zahnachse unsymmetrisch mit einer Schnittseite und mit einer gegenüberliegenden Halteseite ausgebildet ist, wobei der Schutzzahn im Schnittbereich auf der Schnittseite eine Schneide und auf der gegenüberliegenden Halteseite eine Haltekante aufweist. Der Schutzfinger weist auf der Schnittseite eine Vorderkante und auf der Halteseite eine Rückkante auf, wobei die Vorderkante des Schutzfingers ausgehend von der Messerachse zur Zahnachse hin geneigt ist, und wobei die Rückkante des Schutzfingers ausgehend von der Messerachse von der Zahnachse fortweisend geneigt ist. Die zur Messerachse hin geneigte Vorderkante des Schutzfingers erleichtert das Einführen des Schnittgutes von außen in den Schnittbereich. Die von der Zahnachse fortweisend geneigte Rückkante wirkt außerhalb des Schnittbereiches vergleichbar zu einem Widerhaken und hindert bereits eingeführtes Schnittgut daran, beim Schnittvorgang nach außen aus dem Schnittbereich herausgedrückt zu werden. Dieser Effekt wird noch dadurch gesteigert, dass die Haltekante auf der Halteseite des Schnittbereiches nicht als Schneide ausgebildet ist. Vielmehr trifft hier eine Schneide des gegenlaufenden Zahns auf die im Vergleich dazu stumpfwinklige Haltekante. Das Zusammenwirken der Schneide mit der Haltekante führt zu einer guten Schnittleistung und Schnittqualität mit verringerter Tendenz, das Schnittgut nach außen aus dem Schneidbereich herauszudrücken. Die erforderliche Antriebsleistung ist verringert. Insbesondere bei einer optionalen Ausbildung der Heckenschere mit akkubetriebenem Elektromotor führt dies zu einer Verlängerung der Akkustandzeit und damit der innerhalb einer Akkuladung erreichbaren Betriebszeit mit dem dadurch verbesserten Schnittergebnis.

In vorteilhafter Weiterbildung sind die Vorderkante des Schutzfingers in einem ersten Neigungswinkel und die Rückkante in einem zweiten Neigungswinkel geneigt, wobei der Betrag des ersten Neigungswinkels kleiner als der Betrag des zweiten Neigungswinkels ist. Hieraus ergibt sich, dass der Abstand zwischen zwei benachbarten Schutzfingern ein bestimmtes geringstes Maß aufweist, von dem ausgehend sich der Zwischenraum nach innen zum Schnittbereich hin erweitert. Der vorgenannte Minimalabstand zwischen zwei benachbarten Schutzfingern definiert die gewünschte Schutzfunktion, indem nur Schnittgut mit einem Durchmesser unterhalb dieses Minimalabstandes eingeführt werden kann. Sobald dieses Schnittgut jedoch den Bereich des Minimalabstandes nach innen zum Schnittbereich hin passiert hat, entsteht durch den sich in dieser Richtung vergrößernden Abstand eine freie Beweglichkeit des Schnittgutes, die den Eintritt in den Schnittbereich erleichtert. In Gegenrichtung, also ausgehend vom Schnittbereich nach außen verringert sich der Abstand zwischen zwei benachbarten Schutzfingern, so dass das Herausdrücken des Schnittgutes aus dem Schnittbereich erschwert wird.

Um die vorgenannte gewünschte Wirkung zu erzielen, hat sich als zweckmäßig herausgestellt, dass der erste Neigungswinkel in einem Bereich von einschließlich 5° bis einschließlich 15° liegt und bevorzugt etwa 10° beträgt, während der zweite Neigungswinkel in einem Bereich von einschließlich 20° bis einschließlich 40° liegt und bevorzugt etwa 30° beträgt.

In einer bevorzugten Ausführungsform ist die innenseitig des Schutzfingers im Schnittbereich liegende Haltekante ausgehend von der Messerachse zur Zahnachse hin geneigt. In Verbindung mit der in Gegenrichtung geneigten, daran angrenzenden Haltekante des Schutzfingers entsteht eine durchlaufende, konkav gekrümmte Kante, die die Fixierfunktion des Schnittgutes im Schnittbereich unterstützt.

In einer bevorzugten Ausführungsform ist eine gegen die Haltekante laufende Schneide ausgehend von der Messerachse in einem dritten Winkel zur Zahnachse hin geneigt. Dieser dritte Neigungswinkel liegt vorteilhaft in einem Bereich von einschließlich 5° bis einschließlich 15° und beträgt insbesondere etwa 10°. Die Haltekante und die dagegen laufende Schneide begrenzen einen V-förmig nach außen sich erweiternden, im Schnittbereich liegenden Schnittraum, wodurch eine optimale Schnittleistung und Schnittqualität erzielt werden. Der Betrag des dritten Neigungswinkels ist jedoch kleiner/gleich dem Betrag des zweiten Neigungswinkels. Demnach laufen die Rückkante des Schutzfingers und die Verlängerung der gegenlaufenden Schneide in der von der Messerachse fortweisenden Richtung aufeinander zu. In der Folge kann das Schnittgut nicht oder nur eingeschränkt an der Schneide entlang nach außen gleiten.

In vorteilhafter Weiterbildung ist im Schnittbereich auf der Schnittseite ein Schliffbereich vorgesehen, der auf der einen Seite durch die Schneide und auf der gegenüberliegenden Seite durch eine Schliffkante begrenzt ist. Die Vorderkante des Schutzfingers ist gegenüber der Schliffkante in Richtung der Rückkante zurück versetzt. Alternativ oder in Kombination damit kann es zweckmäßig sein, dass die Schliffkante ausgehend von der Messerachse in einem vierten Neigungswinkel zur Zahnachse hin geneigt ist, wobei der vierte Neigungswinkel kleiner als der erste Neigungswinkel der Vorderkante des Schutzfingers ist. Hierdurch kann die Schneide bzw. der zugehörige Schliffbereich geschliffen und auch nachgeschärft werden, ohne dass das Schleifwerkzeug in Kontakt mit dem Schutzfinger gerät. Der Schutzfinger behält seine vorgesehene stumpfe-Form bei, was der Schutzwirkung zu Gute kommt.

In einer bevorzugten Ausführungsform sind zumindest auf einer Seite der Messerachse mindestens zwei benachbarte und insbesondere sämtliche Schneidzähne als Schutzzahn ausgebildet. Bevorzugt sind zwei insbesondere gleiche Schermesser vorgesehen, bei denen auf einer Seite der Messerachse die Schneidzähne als Schutzzahn ausgebildet sind, und bei denen auf der gegenüberliegenden Seite der Messerachse die Schneidzähne ohne Schutzfinger angeordnet sind, wobei die beiden Schermesser bezogen auf die Messerachse um 180° gegeneinander verdreht angeordnet und gegenläufig angetrieben sind. Demnach ist nur eine Seite eines einzelnen Schermessers mit Schutzfingern versehen, was die bewegte Masse verringert. Dennoch sind durch die gegenseitig verdrehte Anordnung der beiden Schermesser beide Seiten der Messeranordnung mit Schutzfingern geschützt. Die Schutzwirkung und die gleichzeitig verbesserte Schnittleistung und Schnittqualität stellen sich auf beiden Seiten über die gesamte Längserstreckung der Messeranordnung ein.

Der Scheidenwinkel der Schneiden liegt vorteilhaft in einem Bereich von einschließlich 25° bis einschließlich 45° und beträgt insbesondere etwa 35°. Die Haltekante der Schneidzähne weist einen Kantenwinkel auf, der bevorzugt in einem Bereich von einschließlich 80° bis einschließlich 100° liegt und insbesondere etwa 90° beträgt. Demnach trifft eine spitzwinklige Schneide auf eine im Vergleich dazu stumpfwinklige Haltekante, wobei innerhalb der vorgenannten Winkelbereiche ein Optimum an Schnittleistung und Schnittqualität gefunden ist.

Ein Ausführungsbeispiel der Erfindung ist nachfolgend anhand der Zeichnungen her beschrieben. Es zeigen:
- Fig. 1: in einer perspektivischen Darstellung eine Heckenschere mit einer erfindungsgemäß ausgeführten Messeranordnung, die zwei gegenläufige Schermesser umfasst;
- Fig. 2: eine Draufsicht eines einzelnen Schermessers nach Fig. 1 mit Einzelheiten zur Anordnung verschiedener Schneidzähne auf beiden Seiten seiner Messerachse;
- Fig. 3: eine vergrößerte Detailansicht einzelner, als Schutzzahn ausgeführter Schneidzähne nach den Figuren 1 und 2 im Zusammenspiel mit einem weiteren Schneidzahn ohne Schutzfinger und Einzelheiten zu deren geometrischen Ausgestaltung;
- Fig. 4: eine Querschnittsdarstellung des Schneidzahnes nach Fig. 3 mit Angaben zum Schneidenwinkel und zum gegenüberliegenden Kantenwinkel.

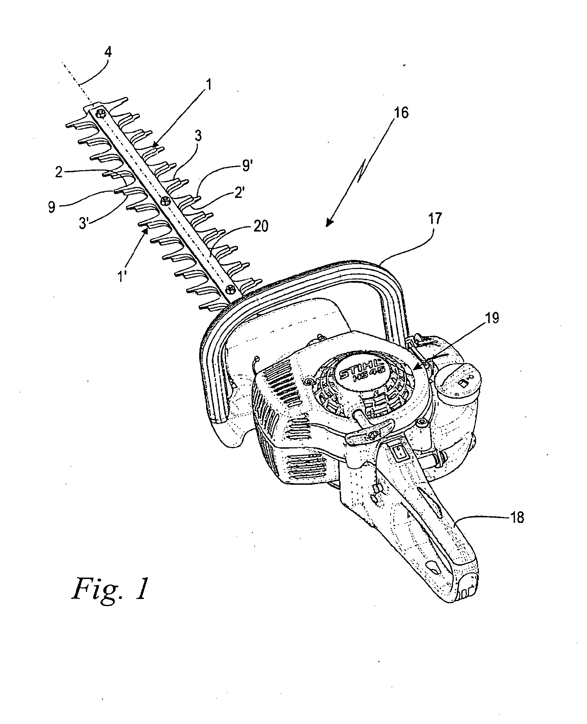

Fig. 1 zeigt in einer perspektivischen Darstellung eine Heckenschere 16 mit einem Motorgehäuse 19. Am Motorgehäuse 19 sind ein vorderer Handgriff 17 und ein hinterer Handgriff 18 angeordnet, an denen die Heckenschere 16 vom Benutzer gegriffen und geführt wird. Auf der Seiten des vorderen Handgriffes 17 schließt sich an das Motorgehäuse 19 eine erfindungsgemäß ausgeführte Messeranordnung an, die einen Messerbalken 20 mit zwei Schermessern 1, 1' umfasst. Der Messerbalken 20 ist fest mit dem Motorgehäuse 19 verbunden.

Die beiden Schermesser 1, 1' sind in Richtung der Längsachse des Messerbalkens 20 oszillierend beweglich daran geführt und gegenläufig oszillierend durch einen nicht dargestellten, im Motorgehäuse 19 angeordneten Antriebsmotor angetrieben. Der Antriebsmotor kann ein Elektromotor für den Netz- oder Akku-Betrieb sein und ist im gezeigten Ausführungsbeispiel ein Verbrennungsmotor insbesondere in einzylindriger Zweitakt-Ausführung.

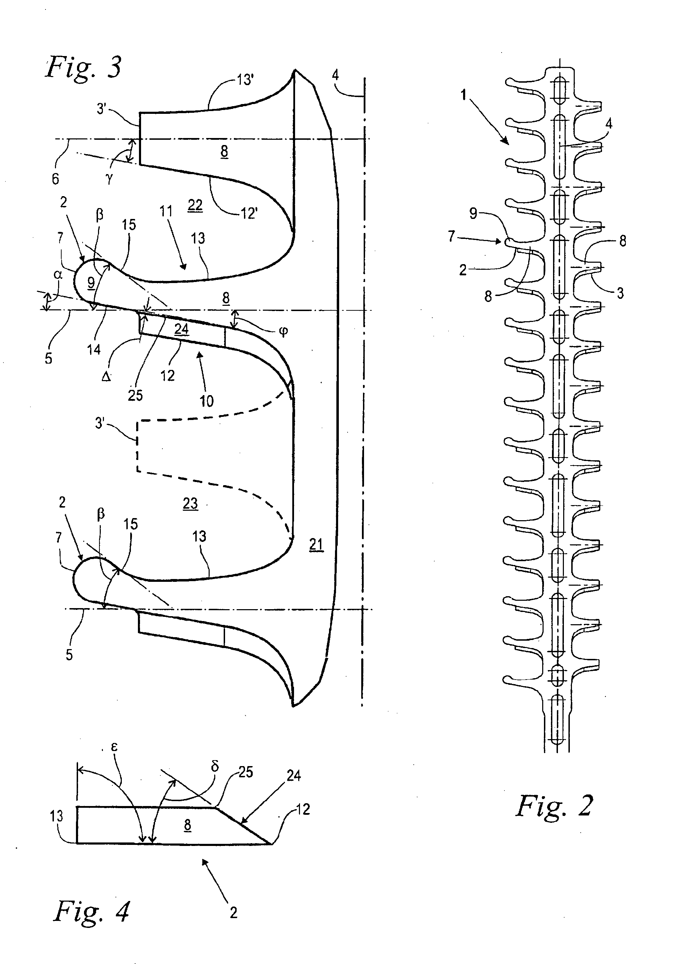

Die beiden Schermesser 1, 1' erstrecken sich jeweils entlang einer Messerachse 4, die parallel zur Längsachse des Messerbalkens 20 liegt. Beidseitig der Messerachse 4 weisen die Schermesser 1, 1' Schneidzähne 2, 2', 3, 3' auf. Einzelheiten hierzu sind in der Draufsicht eines einzelnen Schermessers 1 in Fig. 2 dargestellt. Demnach sind auf einer Seite der Messerachse 4 Schneidzähne 2 und auf der gegenüberliegenden Seite der Messerachse 4 Schneidzähne 3 angeordnet. Sämtliche Schneidzähne 2 auf der einen Seite der Messerachse 4 sind als Schutzzähne 7 mit einem bezogen auf die Messerachse 4 inneren Schnittbereich 8 und mit einem nach außen sich daran anschließenden Schutzfinger 9 ausgestaltet. Die gegenüberliegenden Schneidzähne 3 weisen nur den Schnittbereich 8 auf, ohne dass sich ein Schutzfinger 9 daran anschließt. In den weiter unten noch näher beschriebenen Merkmalen des Schnittbereiches 8 sind die Schneidzähne 2, 3 aber zueinander gleich ausgestaltet.

Es kann zweckmäßig sein, nicht sämtliche Schneidzähne 2 auf einer Seite der Messerachse 4 als Schutzzahn 7 auszugestalten. Zumindest sind aber zwei benachbarte Schneidzähne 2 als Schutzzahn 7 ausgebildet. Außerdem kann es zweckmäßig sein, einzelne oder sämtliche gegenüberliegende Schneidzähne 3 in gleicher Weise wie die Schneidzähne 2 als Schutzzahn 7 auszuführen. Das weitere Schermesser 1' nach Fig. 1 ist zumindest im Bereich seiner Schneidzähne 2', 3' gleich dem Schermesser 1 mit seinen Schneidzähnen 2, 3 ausgestaltet.

Aus der Zusammenschau der Figuren 1 und 2 ergibt sich, dass die beiden Schermesser 1, 1' bezogen auf die Messerachse 4 um 180° gegeneinander verdreht angeordnet sind und flächig aneinander anliegen. Bei ihrer oszillierenden gegenläufigen Bewegung wirken auf der einen Seite der Messerachse 4 die Schneidzähne 2 des oberen Schermessers 1 mit den Schneidzähnen 3' des unteren Schermessers 1' zusammen, während auf der gegenüberliegenden Seite der Messerachse 4 die Schneidzähne 3 des oberen Schermessers 1 mit den Schneidzähnen 2' des unteren Schermessers 1' zusammenwirken. Dabei liegen auf einer Seite der Messerachse 4 die Schutzfinger 9 des oberen Schermessers 1, während auf der gegenüberliegenden Seite die Schutzfinger 9' des unteren Schermessers 1' angeordnet sind. Die Schnittbereiche 8 (Fig. 2) sämtlicher Schneidzähne 2, 2', 3, 3' sind dadurch nach außen durch die Schutzfinger 9, 9' geschützt.

Fig. 3 zeigt in einer vergrößerten Detaildarstellung den Bereich zweier als Schutzfinger 9 ausgeführter Schneidzähne 2 des Schermessers 1 im Zusammenwirken mit einem einzelnen Schneidzahn 3' des Schermessers 1'. Die Schneidzähne 2, 3' erstrecken sich jeweils entlang einer quer bzw. rechtwinklig zur Messerachse 4 liegenden Zahnachse 5, 6. Der als Schutzzahn 7 ausgeführte Schneidzahn 2 ist bezogen auf seine Zahnachse 5 in der hier gezeigten, durch die Zahnachse 5 und die Messerachse 4 vorgegebene Draufsicht unsymmetrisch ausgebildet. Er weist eine Schnittseite 10 und eine bezogen auf die Zahnachse 5 gegenüberliegende Halteseite 11 auf. Auf der Schnittseite 10 ist der Schutzzahn 7 im Schnittbereich 8 mit einer Schneide 12 versehen. Ebenfalls im Schnittbereich 8 ist auf der der Schneide 12 gegenüberliegenden Halteseite 11 eine Haltekante 13 vorgesehen. Die Schneide 12 und die Haltekante 13 erstrecken sich ausgehend von einem Grundkörper 21 des Schermessers 1 entlang des gesamten Schnittbereiches 8 und enden am Schutzfinger 9.

Der Schutzfinger 9 weist auf der Schnittseite 10 eine Vorderkante 14 und auf der gegenüberliegenden Halteseite 11 eine Rückkante 15 auf. Die Vorderkante 14 grenzt abgestuft an die Schneide 12 an, während die Rückkante 15 geschwungen und bündig in die Haltekante 13 übergeht. Die nach innen sich an die Rückkante 15 anschließende Haltekante 13 ist ausgehend von der Messerachse 4 zur Zahnachse 5 hin geneigt. Hieraus ergibt sich ein konkaver Verlauf der durch die Haltekante 13 und die Rückkante 15 gebildeten durchgehenden Kante.

Die Vorderkante 14 des Schutzfingers 9 ist in einem ersten Neigungswinkel α in der hier gezeigten Messerebene ausgehend von der Messerachse 4 zur Zahnachse 5 hin geneigt, während die Rückkante 15 in einem zweiten Neigungswinkel β ausgehend von der Messerachse 4 von der Zahnachse 5 fortweisend geneigt ist. Der Betrag des ersten Neigungswinkels α ist kleiner als der Betrag des zweiten Neigungswinkels β. Der erste Neigungswinkel α liegt vorteilhaft in einem Bereich von einschließlich 5° bis einschließlich 15° und beträgt im gezeigten Ausführungsbeispiel etwa 10°. Der zweite Neigungswinkel β liegt bevorzugt in einem Bereich von einschließlich 20° bis einschließlich 40° und beträgt im gezeigten Ausführungsbeispiel etwa 30°. Die einander zugewandten Vorder- und Rückkanten 14, 15 zweier benachbarter Schutzfinger 9 begrenzen zusammen mit der zugehörigen Schneide 12 und Haltekante 13 einen Zwischenraum 23 der vom Schneidzahn 3' überstrichen wird. Die einander zugewandten Vorder- und Rückkanten 14, 15 der benachbarten Schutzfinger 9 liegen nicht parallel zueinander, sondern erweitern sich V-förmig nach innen zum Schnittbereich 8 hin. In Gegenrichtung, also nach außen aus dem Schnittbereich 8 heraus laufen sie aufeinander zu, so dass sie zwischenliegendes Schnittgut daran hindern, nach außen aus dem Schnittbereich 8 und aus dem Zwischenraum 23 herausgedrückt zu werden.

Im Schnittbereich 8 ist auf der Schnittseite 10 ein Schliffbereich 24 vorgesehen, der bezogen auf die Messerachse 4 auf der einen Seite durch die Schneide 12 und auf der gegenüberliegenden Seite durch eine Schliffkante 25 begrenzt ist. Der Schliffbereich 24 ist im Querschnitt entsprechend der Darstellung nach Fig. 4 ausgehend von der Schliffkante 25 zur Schneide 12 hin scharfkantig zulaufend abgeschrägt. Außerhalb des Schliffbereichs 24 weist der Schneidzahn 2 eine im Wesentlichen konstante Dicke auf. Die Vorderkante 14 des Schutzfingers 9 ist gegenüber der Schliffkante 25 in Richtung der Rückkante 15 um ein Maß Δ zurück versetzt. Außerdem ist die Schliffkante 25 ausgehend von der Messerachse 4 in einem vierten Neigungswinkel ϕ zur Zahnachse 6 hin geneigt. Der vierte Neigungswinkel ϕ ist geringfügig kleiner als der erste Neigungswinkel α der Vorderkante 14. Durch diese Maßnahmen wird erreicht, dass das Schleifwerkzeug beim Schleifen des Schliffbereichs 24 bzw. beim Schärfen der Schneide 12 nicht an die angrenzende Vorderkante 14 des Schutzfingers 9 gelangt.

Im Betrieb läuft der Schneidzahn 3' gegen den als Schutzzahn 7 ausgebildeten Schneidzahn 2 in einer Relativbewegung längs zur Messerachse 4. Hierbei trifft die Schneide 12' des Schneidzahnes 3 auf die Haltekante 13 des Schneidzahnes 2. Die Schneide 12' des Schneidzahnes 3' ist ebenso wie die Schneide 12 des Schneidzahnes 2 in einem dritten Neigungswinkel γ zur Zahnachse 6 hin geneigt. Der dritte Neigungswinkel γ liegt vorteilhaft in einem Bereich von einschließlich 5° bis einschließlich 15° und beträgt im gezeigten Ausführungsbeispiel etwa 10°. Der Betrag des dritten Neigungswinkels γ ist damit kleiner als der Betrag des zweiten Neigungswinkels β. Es kann aber auch zweckmäßig sein, dass der Betrag des dritten Neigungswinkels γ gleich dem Betrag des zweiten Neigungswinkels β ist. Für das Zusammenspiel der Haltekante 13 mit der dagegen laufenden Schneide 12' gilt damit das Gleiche wie im Zusammenhang mit den beiden einander zugewandten Vorder- und Rückkanten 14, 15 zweiter benachbarter Schutzfinger 9 beschrieben: Die Rückkante 15 und die Haltekante 13 des Schutzzahnes 7 begrenzen zusammen mit der gegenlaufenden Schneide 12' des Schneidzahnes 3' einen Schnittraum 22. Die Rückkante 15 und die Verlängerung der Schneide 12' laufen von der Messerachse 4 fortweisend V-förmig aufeinander zu, wodurch sich der Schnittraum 22 nach außen hin verengt. Dadurch behindern sie ein Hinausrutschen des Schnittgutes nach außen aus dem vom Schnittbereich 8 abgedeckten Schnittraum 22 zwischen der Haltekante 13 und der Schneide 12'. Das vorstehend Beschriebene gilt in gleicher Weise auch für das Zusammenspiel der Schneidzähne 2', 3 (Fig. 1).

Fig. 4 zeigt eine Querschnittsdarstellung des Schneidzahnes 2 nach den Figuren 1 bis 3 in seinem Schneidbereich 8. Die Schneide 12 weist einen Schneidenwinkel δ auf, der bevorzugt in einem Bereich von einschließlich 25° bis einschließlich 45° liegt und im gezeigten Ausführungsbeispiel etwa 35° beträgt. Die gegenüberliegende, auf der gleichen Flachseite wie die Schneide 12 liegende Haltekante 13 weist einen Kantenwinkel ε auf, der bevorzugt in einem Bereich von einschließlich 80° bis einschließlich 100° liegt, und der im gezeigten Ausführungsbeispiel 90° beträgt. Die Schneidzähne 3 (Fig. 2) sind in ihrem Schneidbereich 8 in gleicher Weise ausgebildet. Aus der Zusammenschau der Figuren 1 bis 4 ergibt sich, dass in der oszillierenden Relativbewegung der beiden Schermesser 1, 1' immer eine Schneide 12 der Schneidzähne 2, 2' mit dem Schneidenwinkel δ auf eine Haltekante 13' mit dem Kantenwinkel ε des zugeordneten Schneidzahnes 3, 3' trifft, während umgekehrt die Schneiden 12' der Schneidzähne 3, 3' auf die Haltekanten 13 der als Schutzzähne 7 ausgebildeten Schneidzähne 2, 2' trifft. Das Zusammenwirken je einer Schneide 12, 12' mit einer Haltekante 13, 13' führt bei der genannten Ausgestaltung zu einem verbesserten Schnittergebnis, was durch die vorstehend beschriebene Rückhaltewirkung der Schutzfinger 9 in erfindungsgemäßer Weise unterstützt wird und dadurch vollständig zum Tragen kommt.

## Patentansprüche

1. Messeranordnung einer Heckenschere (16), umfassend mindestens ein Schermesser (1, 1') mit Schneidzähnen (2, 3), wobei sich das Schermesser (1, 1') entlang einer Messerachse (4) erstreckt, wobei sich die Schneidzähne (2, 3) jeweils entlang einer quer zur Messerachse (4) liegenden Zahnachse (5, 6) erstrecken, wobei zumindest ein Teil der Schneidzähne (2) als Schutzzahn (7) ausgebildet ist, der einen bezogen auf die Messerachse (4) inneren Schnittbereich (8) aufweist, und an den sich ein äußerer Schutzfinger (9) anschließt,
**dadurch gekennzeichnet, dass** der Schutzzahn (7) bezogen auf seine Zahnachse (5) unsymmetrisch mit einer Schnittseite (10) und mit einer gegenüberliegenden Halteseite (11) ausgebildet ist, wobei der Schutzzahn (7) im Schnittbereich (8) auf der Schnittseite (10) eine Schneide (12) und auf der gegenüberliegenden Halteseite (11) eine Haltekante (13) aufweist, wobei der Schutzfinger (9) auf der Schnittseite (10) eine Vorderkante (14) und auf der Halteseite (11) eine Rückkante (15) aufweist, wobei die Vorderkante (14) ausgehend von der Messerachse (4) zur Zahnachse (5) hin geneigt ist, und wobei die Rückkante (15) ausgehend von der Messerachse (4) von der Zahnachse (5) fortweisend geneigt ist.

2. Messeranordnung nach Anspruch 1,
**dadurch gekennzeichnet, dass** die Vorderkante (14) in einem ersten Neigungswinkel (α) und die Rückkante (15) einem zweiten Neigungswinkel (β) geneigt ist, wobei der Betrag des ersten Neigungswinkel (α) kleiner als der Betrag des zweiten Neigungswinkel (β) ist.

3. Messeranordnung nach Anspruch 2,
**dadurch gekennzeichnet, dass** der erste Neigungswinkel (α) in einem Bereich von einschließlich 5° bis einschließlich 15° liegt und bevorzugt etwa 10° beträgt, und dass der zweiten Neigungswinkel (β) in einem Bereich von einschließlich 20° bis einschließlich 40° liegt und bevorzugt etwa 30° beträgt.

4. Messeranordnung nach einem der Ansprüche 1 bis 3,
**dadurch gekennzeichnet, dass** die Haltekante (13) ausgehend von der Messerachse (4) zur Zahnachse (5) hin geneigt ist.

5. Messeranordnung nach einem der Ansprüche 1 bis 4,
**dadurch gekennzeichnet, dass** eine gegen die Haltekante (13) laufende Schneide (12') ausgehend von der Messerachse (4) in einem dritten Neigungswinkel (γ) zur Zahnachse (6) hin geneigt ist, wobei der Betrag des dritten Neigungswinkel (γ) kleiner/gleich dem Betrag des zweiten Neigungswinkel (β) ist.

6. Messeranordnung nach Anspruch 5,
**dadurch gekennzeichnet, dass** der dritte Neigungswinkel (γ) in einem Bereich von einschließlich 5° bis einschließlich 15° liegt und bevorzugt etwa 10° beträgt.

7. Messeranordnung nach einem der Ansprüche 1 bis 6,
**dadurch gekennzeichnet, dass** im Schnittbereich (8) auf der Schnittseite (10) ein Schliffbereich (24) vorgesehen ist, der auf der einen Seite durch die Schneide (12) und auf der gegenüberliegenden Seite durch eine Schliffkante (25) begrenzt ist, und dass die Vorderkante (14) gegenüber der Schliffkante (25) in Richtung der Rückkante (15) zurück versetzt ist.

8. Messeranordnung nach einem der Ansprüche 1 bis 7,
**dadurch gekennzeichnet, dass** die Schliffkante (25) ausgehend von der Messerachse (4) in einem vierten Neigungswinkel (ϕ) zur Zahnachse (6) hin geneigt ist, wobei der vierte Neigungswinkel (ϕ) kleiner als der erste Neigungswinkel (α) der Vorderkante (14) ist.

9. Messeranordnung nach einem der Ansprüche 1 bis 8,
**dadurch gekennzeichnet, dass** auf zumindest einer Seite der Messerachse (4) mindestens zwei benachbarte und insbesondere sämtliche Schneidzähne (2) als Schutzzahn (7) ausgebildet sind.

10. Messeranordnung nach einem der Ansprüche 1 bis 9,
**dadurch gekennzeichnet, dass** zwei insbesondere gleiche Schermesser (1, 1') vorgesehen sind, bei denen auf einer Seite der Messerachse (4) die Schneidzähne (2) als Schutzzahn (7) ausgebildet sind, und bei denen auf der gegenüberliegenden Seite der Messerachse (4) die Schneidzähne (3) ohne Schutzfinger (9) angeordnet sind, wobei die beiden Schermesser (1, 1') bezogen auf die Messerachse (4) um 180° gegeneinander verdreht angeordnet und gegenläufig angetrieben sind.

11. Messeranordnung nach einem der Ansprüche 1 bis 10,
**dadurch gekennzeichnet, dass** die Schneide (12) des Schneidzahnes (2, 3) einen Schneidenwinkel (δ) aufweist, der in einem Bereich von einschließlich 25° bis einschließlich 45° liegt und bevorzugt etwa 35° beträgt.

12. Messeranordnung nach einem der Ansprüche 1 bis 11,
**dadurch gekennzeichnet, dass** die Haltekante (13) des Schneidzahnes (2, 3) einen Kantenwinkel (ε) aufweist, der in einem Bereich von einschließlich 80° bis einschließlich 100° liegt und bevorzugt etwa 90° beträgt.

## Claims

1. Cutter assembly of a hedge trimmer (16), comprising at least one trimming blade (1, 1') with cutting teeth (2, 3), wherein the trimming blade (1, 1') extends along a cutter axis (4), wherein each of the cutting teeth (2, 3) extends along a tooth axis (5, 6) extending at right angles to the cutter axis (4), wherein at least a part of the cutting teeth (2) is designed as a protective tooth (7) having an inner cutting region (8) relative to the cutter axis (4) and being adjoined by an outer protective finger (9),
**characterised in that** the protective tooth (7) is, relative to its tooth axis (5), designed to be asymmetric with a cutting side (10) and an opposite holding side (11), wherein the protective tooth (7) has in the cutting region (8) a cutting blade (12) on the cutting side (10) and a holding edge (13) on the opposite holding side (11), wherein the protective finger (9) has a front edge (14) on the cutting side (10) and a rear edge (15) on the holding side (11), wherein the front edge (14), starting from the blade axis (4), is inclined towards the tooth axis (5), and wherein the rear edge (15), starting from the blade axis (4), is inclined away from the tooth axis (5).

2. Cutter assembly according to claim 1,
**characterised in that** the front edge (14) is inclined at a first angle of inclination (α) and the rear edge (15) is inclined at a second angle of inclination (β), the amount of the first angle of inclination (α) being less than the amount of the second angle of inclination (β).

3. Cutter assembly according to claim 2,
**characterised in that** the first angle of inclination (α) lies in a range of 5° to 15° inclusive, being preferably approximately 10°, and **in that** the second angle of inclination (β) lies in a range of 20° to 40° inclusive, being preferably approximately 30°.

4. Cutter assembly according to any of claims 1 to 3,
**characterised in that** the holding edge (13), starting from the blade axis (4), is inclined towards the tooth axis (5).

5. Cutter assembly according to any of claims 1 to 4,
**characterised in that** a cutting blade (12') running against the holding edge (13), starting from the blade axis (4), is inclined at a third angle of inclination (γ) towards the tooth axis (6), the amount of the third angle of inclination (γ) being less than/equal to the amount of the second angle of inclination (β).

6. Cutter assembly according to claim 5,
**characterised in that** the third angle of inclination (γ) lies in a range of 5° to 15° inclusive, being preferably approximately 10°.

7. Cutter assembly according to any of claims 1 to 6,
**characterised in that**, in the cutting region (8) on the cutting side (10), there is provided a grinding region (24), which is bounded by the cutting edge (12) on one side and by a grinding edge (25) on the opposite side, and **in that** the front edge (14) is offset towards the rear edge (15) relative to the grinding edge (25).

8. Cutter assembly according to any of claims 1 to 7,
**characterised in that** the grinding edge (25), starting from the blade axis (4), is inclined at a fourth angle of inclination (ϕ) towards the tooth axis (6), the fourth angle of inclination (ϕ) being less than the first angle of inclination (α) of the front edge (14).

9. Cutter assembly according to any of claims 1 to 8,
**characterised in that** at least two adjacent and in particular all cutting teeth (2) are designed as protective tooth (7) on at least one side of the cutter axis (4).

10. Cutter assembly according to any of claims 1 to 9,
**characterised in that** two in particular identical trimming blades (1, 1') are provided, wherein the cutting teeth (2) are designed as protective tooth (7) on one side of the cutter axis (4), and wherein cutting teeth (3) without a protective finger (9) are provided on the opposite side of the cutter axis (4), the two trimming blades (1, 1') being arranged at an angle of 180° to one another relative to the cutter axis (4) and being driven in opposite directions.

11. Cutter assembly according to any of claims 1 to 10,
**characterised in that** the cutting blade (12) of the cutting tooth (2, 3) has a blade angle (δ) which lies in a range of 25° to 45° inclusive, being preferably approximately 35°.

12. Cutter assembly according to any of claims 1 to 11,
**characterised in that** the holding edge (13) of the cutting tooth (2, 3) has an angle between faces (ε) which lies in a range of 80° to 100° inclusive, being preferably approximately 90°.

## Revendications

1. Dispositif de coupe d'un taille-haie (16), comprenant au moins une lame de coupe (1, 1') avec des dents coupantes (2, 3), étant précisé que la lame de coupe (1, 1') s'étend le long d'un axe de lame (4), que les dents coupantes (2, 3) s'étendent chacune le long d'un axe de dent (5, 6) transversal par rapport à l'axe de lame (4), qu'une partie au moins des dents coupantes (2) sont conçues comme des dents de protection (7) qui présentent une zone de coupe (8) intérieure, par rapport à l'axe de lame (4), et auxquelles fait suite une saillie de protection (9) extérieure,
**caractérisé en ce que** la dent de protection (7) présente une forme asymétrique par rapport à son axe de dent (5), avec un côté coupe (10) et un côté retenue opposé (11), étant précisé que la dent de protection (7) présente dans la zone de coupe (8) sur le côté coupe (10) un tranchant (12), et sur le côté retenue opposé (11) une arête de retenue (13), que la saillie de protection (9) présente sur le côté coupe (10) une arête avant (14) et sur le côté retenue (11) une arête arrière (15), que l'arête avant (14) est inclinée, à partir de l'axe de lame (4), en direction de l'axe de dent (5), et que l'arête arrière (15) est inclinée, à partir de l'axe de lame (4), à l'opposé de l'axe de dent (5).

2. Dispositif de coupe selon la revendication 1,
**caractérisé en ce que** l'arête avant (14) est inclinée suivant un premier angle d'inclinaison (α) et l'arête arrière (15) suivant un deuxième angle d'inclinaison (β), étant précisé que la valeur du premier angle d'inclinaison (α) est inférieure à la valeur du deuxième angle d'inclinaison (β).

3. Dispositif de coupe selon la revendication 2,
**caractérisé en ce que** le premier angle d'inclinaison (α) est situé dans une plage de 5° inclus à 15° inclus et est de préférence d'environ 10°, et **en ce que** le deuxième angle d'inclinaison (β) est situé dans une plage de 20° inclus à 40° inclus et est de préférence d'environ 30°.

4. Dispositif de coupe selon l'une des revendications 1 à 3,
**caractérisé en ce que** l'arête de retenue (13) est inclinée, à partir de l'axe de lame (4), en direction de l'axe de dent (5).

5. Dispositif de coupe selon l'une des revendications 1 à 4,
**caractérisé en ce qu'**un tranchant (12') qui s'étend vers l'arête de retenue (13) est incliné à partir de l'axe de lame (4) suivant un troisième angle d'inclinaison (γ) en direction de l'axe de dent (6), étant précisé que la valeur du troisième angle d'inclinaison (γ) est inférieure ou égale à la valeur du deuxième angle d'inclinaison (β).

6. Dispositif de coupe selon la revendication 5,
**caractérisé en ce que** le troisième angle d'inclinaison (γ) est situé dans une plage de 5° inclus à 15° inclus et est de préférence d'environ 10°.

7. Dispositif de coupe selon l'une des revendications 1 à 6,
**caractérisé en ce que** dans la zone de coupe (8), il est prévu sur le côté coupe (10) une zone affûtée (24) qui est délimitée sur un côté par le tranchant (12) et sur le côté opposé par une arête affûtée (25), et **en ce que** l'arête avant (14) est en retrait par rapport à l'arête affûtée (25) en direction de l'arête arrière (15).

8. Dispositif de coupe selon l'une des revendications 1 à 7,
**caractérisé en ce que** l'arête affûtée (25) est inclinée à partir de l'axe de lame (4) suivant un quatrième angle d'inclinaison (δ) en direction de l'axe de dent (6), étant précisé que le quatrième angle d'inclinaison (ϕ) est inférieur au premier angle d'inclinaison (α).

9. Dispositif de coupe selon l'une des revendications 1 à 8,
**caractérisé en ce que** sur au moins un côté de l'axe de lame (4), au moins deux dents coupantes (2) voisines et en particulier entières sont conçues comme des dents de protection (7).

10. Dispositif de coupe selon l'une des revendications 1 à 9,
**caractérisé en ce qu'**il est prévu deux lames de coupe (1, 1') en particulier identiques, pour lesquelles sur un côté de l'axe de lame (4) les dents coupantes (2) sont conçues comme des dents de protection (7) et sur le côté opposé de l'axe de lame (4) les dents coupantes (3) sont disposées sans saillie de protection (9), étant précisé que les deux lames de coupe (1, 1') sont disposées en étant tournées à 180° l'une contre l'autre par rapport à l'axe de lame (4), et sont entraînées en sens inverse.

11. Dispositif de coupe selon l'une des revendications 1 à 10,
**caractérisé en ce que** le tranchant (12) de la dent coupante (2, 3) présente un angle de tranchant (δ) qui est situé dans une plage de 25° inclus à 45° inclus et est de préférence d'environ 35°.

12. Dispositif de coupe selon l'une des revendications 1 à 11,
**caractérisé en ce que** l'arête de retenue (13) de la dent coupante (2, 3) présente un angle d'arête (ε) qui est situé dans une plage de 80° inclus à 100° inclus et est de préférence d'environ 90°.
